# EUROPEAN PATENT SPECIFICATION

(11) **EP 1 991 596 B1**
(45) Date of publication and mention of the grant of the patent: **21.10.2009**
(21) Application number: 07763364.2
(22) Date of filing: 07.02.2007
(51) Int. Cl.: C08G 18/12, C08G 18/32, C08G 18/30, C09J 175/04

(54) **MOISTURE CURE ADHESIVE FOR BONDING STRUCTURAL WOOD**
FEUCHTIGKEITSHÄRTENDER KLEBSTOFF ZUM KLEBEN VON BAUHOLTZ
ADHESIF DURCISSANT A L'HUMIDITE POUR COLLER UN BOIS DE STRUCTURE

(30) Priority: 07.02.2006 US 348699
(43) Date of publication of application: 19.11.2008
(73) Proprietor: H.B. FULLER LICENSING & FINANCING, INC., Saint Paul, Minnesota 55164-0683 (US)
(72) Inventor: GIORGINI, Albert M., Lino Lakes, MN 55038 (US); BURROWS, Benjamin E., St. Louis Park, MN 55416 (US)
(74) Representative: Maiwald, Walter
(86) International application number: PCT/US2007/003402
(87) International publication number: WO 2007/092572

(56) References cited:
- EP-A- 1 072 621
- DE-A1- 4 406 211
- US-A1- 2002 117 260
- US-A1- 2004 071 981

## Description

### Field of the Invention

The invention is directed to a moisture cure adhesive composition for bonding structural wood. In particular, the invention is directed to a one-component moisture cure adhesive composition that includes an isocyanate-terminated polyurethane prepolymer.

### Background of the Invention

One-component and two-component polyurethane (PUR) adhesives have been used for bonding wood for many years. However, these adhesives are generally not suitable for applications that require high structural bond strength at elevated temperatures, e.g., a temperature of greater than about 100°C. Many PUR adhesive formulations may only suitable for applications at a temperature of up to about 80° C. Above these temperatures conventional PUR adhesives show a rapid loss of bond strength or a significant decrease in modulus. Such a reduction in physical and mechanical properties typically shows up as a noticeable creep in the bond line of a bonding product under load conditions. The loss of the bond strength as a noticeable creep under load has prevented the conventional PUR adhesives from bonding structural wood products such as fingerjointed structural studs and structural laminate beams.

US 2002/0117260 discloses in the example 1 a process for bonding two or more wood substrates, using a prepolymer with an NCO content of 14,67% and a viscosity of 6500 mPa.s at 23°C prepared from polypropylene ether glycol and polymeric MDI.

DE 44 06 211 A1 discloses in the example 2 a moisture cure adhesive comprising an isocyanate terminated prepolymer that is the reaction product of a Desmodur VKS-H with castor oil and polypropylene glycol. The product has an NCO content of 13,8% by weight and a viscosity of 7000 mPa.s at 23°C.

US 2004/071981 A1 discloses in the example 1 a moisture cure adhesive for bonding wood parts comprising an isocyanate terminated prepolymer that is the reaction product of a 50/50 mixture of 2,4'- and 4,4'-diphenylmethane diisocyanate with castor oil. The product has an NCO content of 14,3% by weight and a viscosity of 7200 mPa.s at 25°C.

A one-component moisture cure adhesive exhibiting high heat resistance, water resistance and good adhesion to bond structural wood would benefit the needs of the construction industry.

### Summary of the Invention

In one aspect, the invention features a one-component moisture cure polyurethane adhesive composition that includes a moisture curable polyurethane prepolymer. The prepolymer is a reaction product of an aliphatic polyol component, an aromatic polyol component, and an aromatic isocyanate component. The composition has a total isocyanate content of no less than about 5% by weight based on the total weight of the composition.

In some embodiments, the composition has a total isocyanate content of no less than about 7% by weight based on the total weight of the composition. In other embodiments, the composition has a total isocyanate content of no less than about 10% by weight based on the total weight of the composition. In one embodiment, the composition has a total isocyanate content of no less than about 14% by weight based on the total weight of the composition.

In another aspect, the invention features a one-component moisture cure polyurethane adhesive composition that includes a moisture curable polyurethane prepolymer. The prepolymer is a reaction product of an aliphatic polyol component, an aromatic polyol component, and an aromatic isocyanate component. The composition has a viscosity of no greater than about 100 Pa·s (100,000 cps) at 25°C (77°F.)

In some embodiments, the composition has a viscosity of no greater than about 70 Pa·s (70,000 cps), or no greater than about 50 Pa·s (50,000 cps), or no greater than about 20 Pa·s (20,000 cps), or at least about 1 Pa·s (1,000 cps) at 25°C (77°F.).

The composition exhibits very high heat resistance as measured by resistance to creep under load at 180°C according to the NLGA SPS-5 Annex A test method.

The composition exhibits block shear strength of at least 10 mPa. according to the NLGA SPS Annex A test method.

In another aspect, the invention features a process for bonding two substrates together including applying the moisture cure adhesive composition of the invention on at least one surface of a first substrate, and contacting the adhesive bearing surface of the first substrate with a second substrate to form a laminate.

In yet another aspect, the invention features an article including a first substrate, a second substrate and the adhesive composition of the invention sandwiched between the first substrate and the second substrate.

In some embodiments, the first and the second substrates are wood such as natural soft wood or hard wood, e.g., pine, fir, maple, oak, aspens, ash, etc., or synthetic wood, or wood/plastic composites.

The article includes such as structural beam, laminated veneer lumber (LVL), I-joint, finger-joint studs, and plywood.

The adhesive composition of the invention contains a very low content of volatile organic component(s), e.g., no greater than about 100 g/l, associated with the use of any organic solvent(s).

### Detailed Description of the Invention

The moisture cure adhesive composition includes an isocyanate terminated prepolymer, and optionally, an antioxidant. The isocyanate-terminated prepolymer is a reaction product of at least one aliphatic polyol component, at least one aromatic polyol component and at least one aromatic isocyanate component. "Polyol" as used herein includes those that have two or more hydroxyl functionalities such as diols and triols.

Useful aliphatic polyol component includes those that do not contain an aromatic ring in the main molecular chain, such as polyester polyols, polyether polyols, polyalkylene polyols, and mixtures thereof. Examples of useful aliphatic polyols include those having from 2 to 15 carbon atoms such as ethylene, propylene, tetramethylene, isobutylene, pentamethylene, 2,2-dimethyltrimethylene, hexamethylene, and decamethylene glycols, dihydroxycyclohexane, cyclohexane dimethanol, and the like. In some embodiments, the aliphatic diols and/or triols have from 2 to 6 carbon atoms.

Examples of useful polyether polyols include the poly(alkylene oxide) glycols wherein alkylene has 2 to 6 carbon atoms, such as poly(1,2- and 1,3-propylene oxide) glycol, poly(tetramethylene oxide) glycol, poly(pentamethylene oxide) glycol, poly(hexamethylene oxide) glycol and poly (1,2-butylene oxide) glycol; random or block copolymers of ethylene oxide and 1,2-propylene oxide (used in proportions such that the carbon to oxygen mole ratio in the glycol exceeds 2.5:1) and poly-formals prepared by reacting formaldehyde with glycols such as pentamethylene glycol, or mixtures of glycols, such as a mixture of tetramethylene and pentamethylene glycols.

In some embodiments, the polyether polyols include a polyoxyalkylene polyol having from 2 to 6 carbon atoms in the alkylene group. In one embodiment, the polyoxyalkylene polyols include polytetramethylene ether glycol (PTMEG).

Examples of other useful aliphatic polyols include thiol functional polymers and oligomers such as polyethers, polyesters, polyether urethanes, and polythioethers; hydroxy-terminated polybutadiene; hydroxy-terminated acrylic polyols; and amine-terminated polyethers; castor oil, and mixtures thereof.

Examples of commercially available aliphatic polyols include Polymeg 1000 from BASF (Wyandotte, MI).

Useful aromatic polyol component includes polyols that have at least two hydroxyl functionalities and at least one aromatic ring in the molecular chain. The aromatic polyols may have a weight average molecular weight of no greater than about 2,000 g/mole, or no greater than about 1,000 g/mole, or no less than about 100 g/mole. Examples of aromatic polyols include such as resorcinol, hydroquinone, 1,5-dihydroxynapthalene, hydroxymethyl ether resorcinol, hydroxyethyl ether resorcinol, aromatic polyesters based on ortho phthalate from Stepan Company (Northfield, IL), and mixtures thereof. Other examples of the aromatic polyols include such as bis(p-hydroxydiphenyl), bis(p-hydroxyphenyl) methane, bis(p-hydroxyphenyl) methane, bis(p-hydroxyphenyl) propane, 2,2-bis(p-hydroxyphenyl) propane, and mixtures thereof.

Examples of commercially available aromatic polyols include HER TG 250 from INSPEC (Pittsburgh, PA).

Useful aromatic isocyanate component includes those that have at least one aromatic ring in the main molecular chain and have about two or more isocyanate functionalities. Examples of useful aromatic isocyanates include those that have a weight average molecular weight of no greater than about 1,000 g/mole, or no less than about 160g/mole, such as diphenyl methane diisocyanate (MDT), toluene diisocyanate (TDI) and p-phenylenediisocyanate (PPDI), naphthalene diisocyanate, dimer diisocyanate and all polymeric, trimeric isocyanates. In some embodiments, the aromatic isocyanates include diphenyl methane diisocyanate (MDI), tetramethylxylene diisocyanate, toluene diisocyanate (TDI), or mixtures thereof.

Examples of commercially available aromatic isocyanates include PAPI 2094 from Dow Chemical Company (Midland, MI).

The isocyanate terminated prepolymer has a weight average molecular weight of no less than about 1,000 g/mole, or no greater than about 50,000 g/mole, or no greater than about 20,000 g/mole, or even no greater than about 10,000 g/mole.

The isocyanate-terminated prepolymer has a viscosity of no greater than about 100 Pa·s (100,000 cps), or no greater than about 60 Pa·s (60,000 cps), or no greater than about 30 Pa·s (30,000 cps), or no greater than about 15 Pa·s (15,000 cps), or even no greater than about 10 Pa·s (10,000 cps) at 25°C (77°F).

The isocyanate-terminated prepolymer has a relatively high free isocyanate content. Free isocyanate content refers to the isocyanate groups on the free isocyanate monomers, which are the isocyanate monomers that did not participate in the formation of the prepolymer. Free isocyanate content is based on the total isocyanate content in the adhesive composition. In some embodiments, the free isocyanate content in the prepolymer is greater than about 10% by weight, or greater than about 20 % by weight. In one embodiment, the isocyanate-terminated prepolymer has about 40% by weight of the free isocyanate content.

Useful antioxidants include phenolics, phosphates, thioesters, and hindered amines.

Examples of commercially available antioxidants include Cyanox 1790, Cyanox LTDP, from Cytec Industries (West Peterson, NJ); Irganox 1010 from Ciba Specialty chemical Inc. (Tarrytown, NY); BNX 1010, 1076, DLTDP from Mayzo(Noscross GA); Anox from Great lakes Chemical (West Lafayette, IN). Antioxidant may be present in the adhesive composition in an amount of from about 0.05 % by weight to about 1 % by weight, based on the total weight of the composition.

The moisture cure adhesive composition of the invention is in liquid form at ambient temperatures. It is also substantially solvent(s) free. That is, the composition does not contain any substantial amount, e.g., greater than about 5 % by weight, or greater than about 2 % by weight based on the total weight of the composition, of any organic solvent(s).

The adhesive composition has a viscosity of no greater than about 100 Pa·s (100,000cps), or no greater than about 70 Pa·s (70,000 cps), or no greater than about 50 Pa·s (50,000 cps), or no greater than about 20 Pa·s (20,000 cps), or no less than about 1 Pa·s (1,000 cps), or no less than about 2 Pa·s (2,000 cps) at 25°C (77°F).

The adhesive composition has a total isocyanate content (% NCO) of greater than about 5 % by weight, or no less than about 7% by weight, or no less than about 10 % by weight, or even no less than about 14% by weight, based on the total weight of the adhesive composition. Total isocyanate content refers to all the isocyanate groups in the adhesive composition, which includes the free isocyanate content and the isocyanate content on the prepolymer.

The adhesive composition may also include at least one catalyst to accelerate the curing speed without adversely affecting any other properties of bonded wood products. Examples of useful catalysts include those that contain ether and morpholine functional groups, e.g., 2,2-dimorpholinoethyl ether and di(2,6-dimethyl morpholinoethyl)ether; 4,4'-(oxydi-2,1-ethanediyl)bis-morpholine; tertiary amine; organo tin, zinc and bismuth catalysts such as dibutyl tin dilaurate, dibutyl tin diacetate and bismuth octoate, and mixtures thereof. Commercially available catalysts include 4,4'-(oxydi-2,1-ethanedyl) bis-morpholine know as Jeffcat^{™} DMDEE from Huntsman Corp. (Houston, TX), Dabco BL-19, Dabco T-9 and Dabco T-12 from Air Products, (Allentown, PA), and Coscat 83 from Caschem (Bayonne, NJ). The catalyst may be present in an amount of no greater than about 2 wt%, or no greater than about 1.5 wt%, or no less than about 0.05 wt%, based on the total weight of the composition.

The adhesive composition may also include other optional ingredients such as pigments, fillers, plasticizers or diluents, defoamers, etc. and combination thereof.

The adhesive composition can be prepared by conventional processes known in the art. For example, the compositions can be prepared by first preparing isocyanate-terminated polyurethane prepolymer, and then blending the prepolymer with other optional ingredient(s). Alternatively, the adhesive composition can be made by preparing the isocyanate-terminated polyurethane prepolymer together with any other optional ingredient(s), such as catalyst(s), antioxident(s), plasticizer(s), etc. Thus, optional ingredient(s) can be added prior to, during, or after the formation of the prepolymer to obtain the adhesive composition.

The isocyanate-terminated polyurethane prepolymer is prepared by reacting the polyol component(s) with the polyisocyanate component at an elevated temperature of from about 25°C (77°F) to about 82,2°C (180°F). The polyol component(s) may first be introduced into a reaction vessel, heated to reaction temperature and dried to remove ambient moisture absorbed by the polyol(s). The polyisocyanate component is then added to the reactor. The polyol(s) is generally reacted with the polyisocyanate at a stoichiometric ratio depending on the hydroxy (OH) and isocyanate (NCO) functionality of the reactants. Typically the reactants are reacted at a ratio that the reaction between isocyanate groups and hydroxy groups leaves essentially no residual hydroxy functionality. Typically, the reaction between the polyol(s) and the polyisocyanate is conducted at a NCO/OH ratio of at least about 1.8, or from about 2 to about 20 to obtain the desired prepolymer. The prepolymer is titrated to measure residual concentration of isocyanate using ASTM D-2572-80 "Standard Method for Isocyanate Group and Urethane Materials or Prepolymers" to determine the completion of the reaction.

The adhesive composition can be applied by extrusion, brush, roll coat or spray.

Wood products include, e.g., finger-jointed structure, structural beam, laminated veneer lumber (LVL), I-joint, plywood, or combinations thereof. Suitable wood includes natural wood material, e.g. hard and soft woods.

The adhesive composition can be cured by contacting moisture at various conditions depending on the specific formulations. The adhesive composition can be cured at ambient conditions, e.g., ambient temperature and ambient relative humidity. Or, a variety of methods can be used to contact the composition with moisture including, e.g., exposing the composition to ambient moisture; contacting the composition with moisture in the form of a spray, mist, fog or a combination thereof; placing the composition in a chamber with high humidity (e.g., greater than about 50% relative humidity), or the combinations thereof. The composition can be cured at application temperature such as from ambient temperature to about 93,3°C (200°F) depending on the production line. In some embodiments, the composition is curable at ambient conditions after being sandwiched between wood substrates, i.e., there is no need to use heat to cure the composition. The polyurethane adhesive can be cured at ambient conditions, e.g., ambient temperature and ambient relative humidity.

The invention is further illustrated by the following non-limiting examples. All the parts, percentages, ratios, amounts are by weight except otherwise specified.

### Examples

### Testing Methods

### Block Shear Strength

Block shear strength of an adhesive composition is tested according to NL®GA (National Lumber Grades Authority) SPS 5-2003 Special Products Standard for Face-Glued Lumber-Vertical Use Only; NLGA SPS ANNEX A Standard Specification for Evaluation of Adhesives for Structural Wood Products (Exterior Exposure). The evaluation is performed on softwood (black spruce pine).

### Heat Resistance

Heat resistance of an adhesive composition is tested according to NL®GA (National Lumber Grades Authority) SPS 5-2003 Special Products Standard for Face-Glued Lumber-Vertical Use Only; NLGA SPS ANNEX A Standard Specification for Evaluation of Adhesives for Structural Wood Products (Exterior Exposure). The evaluation is performed on softwood (black spruce pine) at three different environmental conditions. The adhesive composition exhibits heat resistance at 180°C if it passes the environmental test condition B2.

### Delamination Resistance

Delamination resistance of an adhesive composition is tested according to NL®GA (National Lumber Grades Authority) SPS 5-2003 Special Products Standard for Face-Glued Lumber-Vertical Use Only; NLGA SPS ANNEX A Standard Specification for Evaluation of Adhesives for Structural Wood Products (Exterior Exposure). The evaluation is performed on softwood (black spruce pine).

### Examples 1-3 and Comparative Examples A and B

Each of the adhesive compositions in Examples 1-3 and in Comparative Examples A and B is prepared using the ingredients listed in Table I.

The heat resistance of the resultant adhesive compositions of Examples 1 and 2 and Comparative Examples A and B are tested according to the NLGA SPS-5 ANNEX A test method and the results are listed in Table II.

The heat resistance, the block shear strength, and the delamination resistance of the resultant adhesive composition of Example 3 are tested according to the NLGA SPS-5 ANNEX A test methods and the results are listed in Table III.

**Table I**

| | | Ex.1 (wt%) | Ex. 2 (wt%) | Ex. 3 (wt%) | Com. Ex. A (wt%) | Com. Ex. B (wt%) |
|---|---|---|---|---|---|---|
| Poly-G 20-110 | Aliphatic polyol | | | | 37.515 | |
| Tone 0201 | Aliphatic polyol | | | | | 9.882 |
| Polymeg 1000 | Aliphatic polyol | 36.00 | 35.98 | 31.081 | | 29.606 |
| HER TG 250 | Aromatic polyol | 1.5 | 1.50 | 3.093 | | |
| Papi 2094 | Aromatic isocyanate | 60.76 | 60.727 | 64.028 | 60.908 | 58.936 |
| T-12 | catalyst | 0.111 | 0.11 | 0.111 | 0.110 | 0.110 |
| H3PO4 | stabilizer | 0.002 | 0.002 | 0.002 | 0.002 | 0.002 |
| Foamkill 8D | defoamer | 0.015 | 0.015 | 0.015 | 0.015 | 0.015 |
| DEM | stabilizer | 0.250 | 0.249 | 0.250 | 0.25 | 0.25 |
| DMDEE | catalyst | 1.12 | 1.117 | 1.120 | 1.200 | 1.200 |
| Tinnvin 765 | Free radical scavenger | 0.25 | 0.300 | | | |
| Cyanox LTDP | Free radical scavenger | | | 0.25 | | |
| Cyanox 1790 | Free radical scavenger | | | 0.05 | | |
| Total %NCO | | 15.22 | 15.27 | 15.87 | 15.75 | 14.16 |
| Viscosity Pa·s (cps) at 25°C (77°F) | | 7.5 (7,500) | 7 (7,000) | 8.1 (8,100) | 4.5 (4,500) | 10.5 (10,500) |

**Table II**

| Test Conditions | SPS-5 Annex A Requirement | Ex. 1 | Ex. 2 | Com. Ex. A | Com. Ex. B |
|---|---|---|---|---|---|
| Environment A (20°C for 7 days at 90% RH) | <0.25 mm | pass | pass | pass | pass |
| Environment B1 (70°C for 7 days at ambient% RH) | <0.25 mm | pass | pass | pass | pass |
| Environment B2 (180°C for 2 hours at ambient% RH) | <0.25 mm | pass | pass | fail | fail |

**Table III**

| **Test** | **Assembly Time (min/min¹)** | | | | **Status** | | |
|---|---|---|---|---|---|---|---|
| | **SPS Annex A Requirement** | **min/min² 0/1** | **min/max³ 0/2** | **max/max⁴ 0/2** | **min/min²** | **min/max³** | **max/max⁴** |
| ***Block Shear Strength*** | | | | | | | |
| Average Shear | >9.5 | 12.6 | 11.0 | 11.0 | Pass | Pass | Pass |
| Strength (mPa) Average Wood Failure (%) | >75 | 91 | 82.0 | S2.0 | Pass | Pass | Pass |
| | | | | | | | |
| ***Resistance to Delamination*** (%) | | | | | | | |
| Total Average Delamination | <5 | 1.2 | 1.0 | 1.0 | Pass | Pass | Pass |
| Maximum Individual Bond line Delamination | <1 | 0.6 | 0.5 | 0.5 | Pass | Pass | Pass |
| | | | | | | | |
| ***Heat Resistance*** (mm) | | | | | | | |
| 27°C, 7 days, 90%RH) (environment A) | <0.25 | 0.0 | 0.0 | 0.0 | Pass | Pass | Pass |
| | | | | | | | |
| 71°C, 7days ambient %RH (environment B1) | <0.25 | 0.0 | 0.0 | 0.0 | Pass | Pass | Pass |
| | | | | | | | |
| 180°C, 2 hours, ambient %RH (environment B2) | <0.25 | 0.0 | 0.0 | 0.0 | Pass | Pass | Pass |

| | | | | | | | |
|---|---|---|---|---|---|---|---|
| 1--minute/minute; 2--minimum/minimum; 3--minimum/maximum; 4--maximum/maximum. | | | | | | | |

## Claims

1. A moisture cure adhesive composition comprising an isocyanate terminated prepolymer that is a reaction product of
a) an aliphatic polyol component that has at least two hydroxyl groups,
b) an aromatic polyol component that has at least two hydroxyl groups, and
c) an aromatic isocyanate component that has at least two isocyanate groups,
wherein said composition has a total isocyanate content of no less than 5% by weight based on the total weight of the composition.

2. A moisture cure adhesive composition comprising an isocyanate terminated prepolymer that is a reaction product of
a) an aliphatic polyol component that has at least two hydroxyl groups,
b) an aromatic polyol component that has at least two hydroxyl groups,
c) an aromatic isocyanate component that has at least two isocyanate groups,
wherein said composition has a viscosity of no greater than 100 Pa·s (100,000 cps) at 25°C (77°F).

3. The composition of claim 1 or 2, wherein said aromatic isocyanate component has a weight average molecular weight of no greater than 1,000 g/mole.

4. The composition of any one of the preceding claims, wherein said aromatic polyol component comprises resorcinol, hydroxymethyl ether resorcinol, hydroxyethyl ether resorcinol, hydroquinone, 1,5-dihydroxynapthalene, aromatic polyesters based on ortho phthalate, or mixtures thereof.

5. The composition of any one of the preceding claims, wherein said composition has a viscosity of from no greater than 50 Pa·s (50,000 cps) at 25°C (77°F).

6. The composition of any one of the preceding claims, wherein said aliphatic polyol component comprises polyester polyols, polyether polyols, castor oil, caprolactone, and mixtures thereof.

7. A process for bonding substrates together comprising
a) applying the moisture cure adhesive composition of any one of the preceding claims on at least one surface of a first substrate,
b) contacting said applied adhesive composition with a second substrate to form a laminate.

8. The process of claim 7, wherein at least one of said first and second substrates comprises natural wood, synthetic wood, or wood/plastic composite.

9. An article comprising a first substrate, a second substrate and the adhesive composition of any one of the claims 1-6 sandwiched between said first and second substrates.

10. The article of claim 9, wherein said article comprises structural beam, laminated veneer lumber (LVL), I-joint, plywood, or finger-jointed stud.

## Patentansprüche

1. Feuchtigkeitshärtende Klebstoffzusammensetzung, umfassend ein mit Isocyanat terminiertes Präpolymer, welches ein Reaktionsprodukt ist von
(a) einer aliphatischen Polyol-Komponente, die mindestens zwei Hydroxyl-Gruppen aufweist,
(b) einer aromatischen Polyol-Komponente, die mindestens zwei Hydroxyl-Gruppen aufweist, und
(c) einer aromatischen Isocyanat-Komponente, die mindestens zwei Isocyanat-Gruppen aufweist,
wobei die Zusammensetzung einen Gesamtisocyanat-Gehalt von nicht weniger als 5 Gewichts-% bezogen auf das Gesamtgewicht der Zusammensetzung aufweist.

2. Feuchtigkeitshärtende Klebstoffzusammensetzung, umfassend ein mit Isocyanat terminiertes Präpolymer, welches ein Reaktionsprodukt ist von
(a) einer aliphatischen Polyol-Komponente, die mindestens zwei Hydroxyl-Gruppen aufweist,
(b) einer aromatischen Polyol-Komponente, die mindestens zwei Hydroxyl-Gruppen aufweist,
(c) einer aromatischen Isocyanat-Komponente, die mindestens zwei Isocyanat-Gruppen aufweist,
wobei die Zusammensetzung eine Viskosität von nicht mehr als 100 Pas (100.000 cps) bei 25°C (77°F) aufweist.

3. Zusammensetzung gemäß Anspruch 1 oder 2, wobei die aromatische Isocyanat-Komponente ein Gewichtsmittel des Molekulargewichts von nicht mehr als 1.000 g/mol aufweist.

4. Zusammensetzung gemäß einem der vorstehenden Ansprüche, wobei die aromatischen Polyol-Komponente Resorcin, Hydroxymethyletherresorcin, Hydroxyethyletherresorcin, Hydrochinon, 1,5-Dihydroxynaphthalin, aromatische Polyester basierend auf ortho-Phthalat oder Gemische davon umfasst.

5. Zusammensetzung gemäß einem der vorstehenden Ansprüche, wobei die Zusammensetzung eine Viskosität von nicht mehr als 50 Pas (50.000 cps) bei 25°C (77°F) aufweist.

6. Zusammensetzung gemäß einem der vorstehenden Ansprüche, wobei die aliphatische Polyol-Komponente Polyesterpolyole, Polyetherpolyole, Rizinusöl, Caprolacton und Gemische davon umfasst.

7. Verfahren zum Zusammenbinden von Substraten, umfassend
(a) Aufbringen einer feuchtigkeitshärtenden Klebstoffzusammensetzung gemäß einem der vorstehenden Ansprüche auf mindestens eine Oberfläche eines ersten Substrats,
(b) Kontaktieren der aufgebrachten Klebstoffzusammensetzung mit einem zweiten Substrat,
um ein Laminat zu bilden.

8. Verfahren gemäß Anspruch 7, wobei mindestens eines der ersten und zweiten Substrate natürliches Holz, synthetisches Holz oder Holz/Plastik-Verbundstoffe umfasst.

9. Gegenstand, umfassend ein erstes Substrat, ein zweites Substrat und die Klebstoffzusammensetzung gemäß einem der Ansprüche 1 bis 6, welche zwischen den ersten und zweiten Substraten geschichtet ist.

10. Gegenstand gemäß Anspruch 9, wobei der Gegenstand Bauträger, laminierte Holzfassaden (LVL), eine E-Verbindung, Sperrholz oder ein Verkämmungsbolzen ist.

## Revendications

1. Composition adhésive durcissable à l'humidité, comprenant un prépolymère à terminaison isocyanate, qui est un produit de réaction de :
a) un composant de type polyol aliphatique qui comporte au moins deux groupes hydroxy,
b) un composant de type de polyol aromatique qui comporte au moins deux groupes hydroxy, et
c) un composant de type isocyanate aromatique qui comporte au moins deux groupes isocyanate,
dans laquelle ladite composition a une teneur totale en groupes isocyanate de pas moins de 5 % en poids par rapport au poids total de la composition.

2. Composition adhésive durcissant à l'humidité, comprenant un prépolymère à terminaison isocyanate, qui est un produit de réaction de :
a) un composant de type polyol aliphatique qui comporte au moins deux groupes hydroxy,
b) un composant de type de polyol aromatique qui comporte au moins deux groupes hydroxy, et
c) un composant de type isocyanate aromatique qui comporte au moins deux groupes isocyanate,
dans laquelle ladite composition a une viscosité de pas plus de 100 Pa.s (100000 cP) à 25 °C (77 °F).

3. La composition de la revendication 1 ou 2, dans laquelle ledit composant de type isocyanate aromatique a un poids moléculaire moyen en poids de pas plus de 1000 g/mole.

4. La composition de l'une quelconque des revendications précédentes, dans laquelle ledit composant de type polyol aromatique comprend le résorcinol, l'hydroxyméthyl éther résorcinol, l'hydroxyéthyl éther résorcinol, l'hydroquinone, le 1,5-dihydroxynaphtalène, des polyesters aromatiques basés sur un groupe orthophtalate ou les mélanges de ceux-ci.

5. La composition de l'une quelconque des revendications précédentes, dans laquelle ladite composition a une viscosité de pas plus de 50 Pa.s (50000 cP) à 25 °C (77 °F).

6. La composition selon l'une quelconque des revendications précédentes, dans laquelle ledit composant de type polyol aliphatique comprend les polyester polyols, les polyéther polyols, l'huile de ricin, la caprolactone et les mélanges de ceux-ci.

7. Procédé pour coller des substrats ensemble, comprenant :
a) l'application de la composition adhésive durcissable à l'humidité de l'une quelconque des revendications précédentes sur au moins une surface d'un premier substrat,
b) la mise en contact de ladite composition adhésive appliquée avec un deuxième substrat pour former un stratifié.

8. Le procédé de la revendication 7, dans lequel au moins l'un des dits premier et deuxième substrats comprend le bois naturel, le bois synthétique ou un matériau composite bois/matière plastique.

9. Article comprenant un premier substrat, un deuxième substrat et la composition adhésive de l'une quelconque des revendications 1 à 6, intercalée entre lesdits premier et deuxième substrats.

10. L'article de la revendication 9, dans lequel ledit article comprend une poutre de construction, du bois d'oeuvre contreplaqué stratifié (LVL), un joint en I, du bois contreplaqué ou un montant assemblé par entures multiples.
